# EUROPEAN PATENT APPLICATION

(11) **EP 2 933 933 A1**
(43) Date of publication of application: **21.10.2015**
(21) Application number: 15161505.1
(22) Date of filing: 27.03.2015
(51) Int. Cl.: H04B 7/26, H04H 20/00, H04W 16/26, H04W 88/08

(54) **Apparatus and method for the selective propagaton of radio signals**

(30) Priority: 09.04.2014 IT UD20140062
(71) Applicant: Witikee SRL, 33100 Udine (IT)
(72) Inventor: Tonello, Andrea, 33100 Udine (IT); Versolatto, Fabio, 33037 Pasian di Prato (UD) (IT)
(74) Representative: Petraz, Gilberto Luigi

(57) **Abstract**

Apparatus (10) for the selective propagation in a closed area (12) of radio signals (R) transmitted by an external radio source (S), wherein the closed area (12) is provided with an internal electric network (11) connected to an external electric power network (14). The apparatus (10) comprises a base station (16) provided with an interface device (31) and a programmable electronic unit (32), and one or more signal transducers (13) separate and remote from the base station (16) inside said closed area (12) and connected to the base station (16) by means of electric conductors (11a) of the same internal electric network (11). The interface device (31) is configured to capture and condition said radio signals (R) and possibly to generate secondary radio signals (R1), and the programmable electronic unit (32) is connected to the interface device (31) and to the internal electric network (11) to receive the radio signals (R) and/or the secondary radio signals (R1) to generate a conducted radio signal (Ru) and to transmit it to the signal transducers (13).

## Description

### FIELD OF THE INVENTION

Forms of embodiment described here concern an apparatus and a method for the selective propagation of radio signals through electric lines.

In particular, forms of embodiment described here can be used in closed and confined areas or spaces with a structure, for example of metal, rock or concrete, and sizes such as to obstruct the propagation inside them of radio signals coming from outside.

### BACKGROUND OF THE INVENTION

It is known that the transmission quality of a radio signal is defined by the relation between the characteristics that the signal has in correspondence to a receiver, and the original characteristics of the signal when it is emitted by a transmitter. The more similar the first characteristics are to the original ones, the greater is the quality of the transmission.

It is also known that the transmission quality of a radio signal depends on the power of the signal transmitted, on the distance between the transmitter and the receiver and on the characteristics of the area or space in which the signal is propagated.

In terms of propagation, the optimal condition is when the transmitter and the receiver are reciprocally visible, that is, when the space between them is without elements impeding the signal emitted by the transmitter from directly reaching the receiver.

Typically, in the natural environment the major obstacles that limit the propagation of radio signals are hills and mountain ranges, while in areas which have been anthropized the typical obstacles are the structural parts of buildings, in particular those made of reinforced concrete, possibly in conjunction with layers of earth, for example in underground areas, or rock walls in road or motorway tunnels.

In the presence of obstacles, the propagation of the radio signals is greatly limited or completely prevented, and the signal that reaches the receiver can be respectively very weak or even absent. In general, the higher the frequency the greater the attenuation experienced by the signal on its travel.

It is known that one example of radio transmissions is given by the radiophonic transmissions of commercial radios at frequency modulations (FM radio). All over the world, FM radio stations normally transmit in a frequency band comprised between 87.5 MHz and 108 MHz, with some minor exceptions, for example in Japan, where lower band portions are used. FM radiophonic transmissions occur with frequency division, that is, each FM radio occupies a portion, or sub-channel of the frequency band available.

The radio signal emitted by FM radios is received, for example, by means of antennas with which radio receiving apparatuses are provided, normally installed in vehicles or in stereophonic systems present in homes. The reception of a radio transmission is possible only if the signal reaches the receiver with a quality, that is, an amplitude, such as to be able to distinguish the signal from the background noise.

On the basis of the above, it is clear that the reception of a radio signal is particularly difficult in underground areas, such as for example underground carparks, or road or motorway tunnels, or again the inside areas of buildings far from the perimeters of the latter.

In these cases, the propagation of FM radio signals, as also for other radio signals, is greatly limited by ground, rock walls, building structures. In the case of underground structures, the reception is good, in general, as far as the first floor down. In the case of tunnels, the reception is good only for the first hundred meters or so after the entrance and before the exit.

Another case where the reception of radio signals is difficult is in mountain regions where the quality of the radio signal is poor because they are hidden, that is, not visible, with respect to the transmitting antenna.

In these cases, it is known to use infrastructures with cables and repeaters, dedicated to carrying the radio signal from the outside to the inside so as to be able to receive and substantially diffuse it in all the internal points desired.

For example, document EP-A-0.153.239 is known, which describes a method for retransmitting AM and FM signals by means of dedicated cables, that is, suitably designed and built, so as to generate losses, that is, to irradiate the radio signal inside the tunnels.

However, such infrastructures have the drawback of being bulky, costly, complex to build and install and require considerable time and resources to install.

Anthropized areas, even closed and confined ones as above, normally have an electric distribution plant which, for example, can have the function of lighting the areas or powering appliances of various types, and can be provided at least with electric conductors defining a cabled electric network and with a plurality of lighting devices or other type of electric appliances connected to it.

It is known that high frequency radio signals that are propagated in the air, such as for example FM radio transmissions as above, couple naturally to electric conductors, and are able to propagate through the cabled electric network. Moreover, the above radio signals can be extracted with good quality from the cabled electric network even in places where it is not possible to receive them through the air.

The possibility is also known of injecting arbitrary radio signals into cabled electric networks and extracting them in the same way at points of the electric network where it is needed.

On this point, document EP-A-2.469.966 is known, which describes a method to propagate a radio signal through obstacles, carrying it on a cabled communication channel. The method described here provides a complex method for the definition of the transmission parameters through the cabled communication channel that provides a) an exchange of information between the transmitter and receiver nodes to assess the performance of the communication channel, b) the definition of the communication parameters, such as the carrier frequency and the band, c) the retransmission of the parameters of communication to the receiving nodes, and d) the configuration of the transmitter and receiver.

There is therefore the need to perfect an apparatus and method for the selective propagation of radio signals that can overcome at least one of the disadvantages of the state of the art.

In particular, one purpose of the present invention is to make an apparatus and perfect a method for the propagation of radio signals that allow the selective propagation, at least in the largest part of the internal space in closed and confined areas, of radio signals coming from outside, using a pre-existing cabled electric network and at least partly inside the closed and confined areas.

Another purpose of the present invention is to solve the limits and reduce the complexities of known methods in order to establish an alternative route for the transmission of a radio signal in an area in which the latter does not propagate.

Another purpose of the present invention is to make an apparatus that is able to generate radio messages and to carry them through a cabled electric network to transmit the radio messages at least in the largest part of the internal space of closed and confined areas.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an apparatus according to the present invention is used for the selective propagation in a closed area of radio signals transmitted by a radio source outside the closed area and not able to propagate in said closed area, wherein the closed area is provided with a pre-existing internal electric network that receives electric energy from an external electric power network.

According to one aspect of the present invention, the apparatus comprises a base station provided with an interface device and a programmable electronic unit, and one or more signal transducers separate and remote from the base station inside the closed area and connected to the base station by means of electric conductors of the internal electric network. Moreover, the base station is positioned in a condition compatible with the capacity of the interface device to capture the radio signals emitted by the radio source. The interface device is configured to capture and condition the radio signals and possibly to generate secondary radio signals, and the programmable electronic unit is connected to the interface device and to the internal electric network to receive the radio signals or secondary radio signals from the interface device, in order to generate conducted radio signals and to transmit them to the signal transducers through the electric conductors as above. The signal transducers are configured to receive the conducted radio signals, possibly to process them, and to again obtain the radio signals or the secondary radio signals to be propagated inside the closed area.

In this way the advantage is obtained of being able to carry and propagate, selectively and preserving their quality, radio signals coming from outside anthropized closed areas to inside closed areas, in this way allowing the diffusion of radio signals even in areas where before it was impossible.

Another advantage of the present invention is the fact that it does not need costly, complex and bulky diffusion structures made for the purpose, but instead exploits the conductor cables of the electric network inside the closed area, pre-existing with respect to the apparatus in question.

Moreover, according to the present invention, a method is provided for the selective propagation of radio signals transmitted by a radio source outside a closed area to inside said closed area and not able to propagate in said closed area. The method is applicable to a closed area provided with an internal electric network that receives electric energy from an external electric power network. The method according to the present invention provides to at least position a base station of an apparatus for the selective propagation of the radio signals in a condition compatible with the capacity of the base station to capture the radio signals, to capture and condition the latter and possibly generate secondary radio signals deriving from their conditioning, to process the radio signals or the secondary radio signals in order to generate a conducted radio signal to be transmitted through the internal electric network. Then, it is provided to inject the conducted radio signal into the internal electric network to transfer the conducted radio signal, by means of electric conductors of the electric network, to one or more signal transducers inside the closed area, to extract the radio signal or the secondary radio signal from the conducted radio signal and to propagate the radio signal or the secondary radio signal, by means of one or more signal transducers, in at least the largest part of the internal space of the closed area, after possible processing.

According to one aspect of the present invention, the radio signals are captured by the base station by receiving them directly from the radio source.

According to another aspect, the radio signals are captured by extracting them from the electric power network.

In implementations of the method according to the invention, conditioning the radio signals comprises one or more operations chosen from eliminating a background noise component, selecting a spectrum part of the radio signals, filtering the rest of the spectrum, partly or totally obscuring the radio signals to obtain secondary radio signals, as a subset of the radio signals.

In accordance with possible variant forms of embodiment, the injection and the extraction of the conducted signal in the internal electric network does not provide procedures to instantiate the communication between the base station and the signal transducers.

According to other forms of embodiment, generating the secondary signal comprises filtering and/or completely obscuring the radio signals and generating a radio signal of the information type distinct from the radio signals.

According to other forms of embodiment, injecting and extracting the radio signals or the secondary radio signals from the internal electric network comprises one or more operations chosen from amplifying or effecting one or more frequency conversions of the radio signals or the secondary radio signals.

Unlike in the state of the art, the apparatus and method according to the present disclosure do not provide elaborate and complex procedures for defining the transmission parameters and for configuring the nodes involved in the transmission. In this way, the present invention allows to resolve the limits and reduce the complexities of known methods in order to establish an alternative travel for the transmission of a radio signal in a space in which the latter does not propagate.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a schematic view of forms of embodiment of an apparatus according to the present invention;
- fig. 2 is a functional diagram of the apparatus in fig. 1;
- fig. 3 is a variant of fig. 2;
- fig. 4 is a functional diagram of a component of the apparatus in fig. 1;
- fig. 5 is another variant of fig. 2.

In the following description, the same reference numbers indicate identical parts of the apparatus for the selective propagation of radio signals according to the present invention, also in different forms of embodiment. It is understood that elements and characteristics of one form of embodiment can be conveniently incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

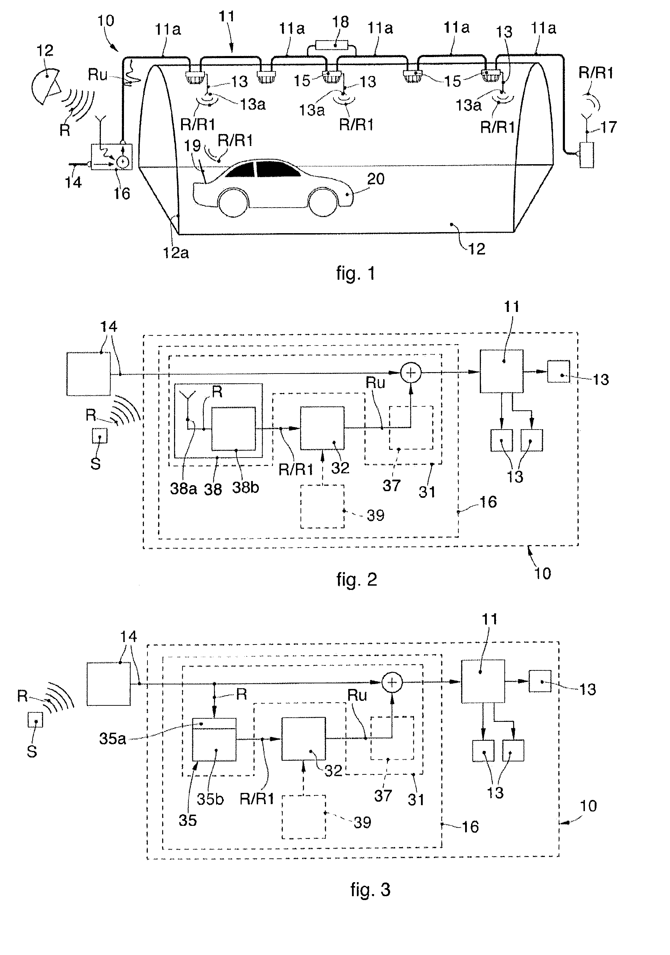

Fig. 1 is used to describe forms of embodiment of an apparatus for the selective propagation of radio signals indicated in its entirety by the reference number 10.

The apparatus 10 is configured to capture radio signals R transmitted by a radio source S, for example a radiophonic transmission antenna, and to propagate the radio signals R, possibly processed, at least in the largest part of the internal space of a closed area 12.

Examples of the closed area 12 can be a road or motorway tunnel, or a building or other structure or infrastructure either underground or partly underground or above the ground, or a means of transport, such as a train, a ship or a plane, that can be of a size or have components that partly or completely obstruct the diffusion inside them of radio signals coming from the outside.

Examples of radio signals R can be radiophonic transmissions of FM commercial radios, comprised for example in the frequency band between 87.5 MHz and 108 MHz, or data transmissions, for example with frequencies around 2.4 GHz or 5 GHz, or also Digital Audio Broadcasting (DAB) signals, comprised for example in the frequency bands 174 MHz - 240 MHz and 1452 MHz - 1490 MHz, or mobile phone radio signals between 800 MHz and 1900 MHz.

The closed area 12 can be provided with an internal electric network 11, which can be conventionally connected to an electric power network 14, outside the closed area 12 and from which the electric internal network 11 receives electric power.

Hereafter in the description, for ease of explanation, the portion of electric network outside the closed area 12 is defined as the electric power network 14.

The internal electric network 11 includes one or more electric conductors 11 a that feed one or more electric appliances, for example lighting devices 15 of a lighting system of the closed area 12.

The apparatus 10 is configured to carry, after having captured and possibly processed them, the radio signals R or a part of them inside the closed area 12 through the electric conductors 11a of the internal electric network 11.

In some forms of embodiment, the apparatus 10 comprises a base station 16 interposed between the electric power network 14 and the internal electric network 11.

In possible implementations, shown by way of example in fig. 1, the base station 16 can be disposed outside the closed area 12, in a condition of radio visibility with respect to the radio source S, that is, in a position compatible with undisturbed reception or minimally disturbed reception of the radio signals R transmitted by the radio source S.

In other implementations, the base station 16 can be disposed in the immediate vicinity of an aperture 12a of the closed area 12 that puts the internal space of the latter in communication with the outside.

The apparatus 10 can also include one or more signal transducers 13, separate and remote from the base station 16 and connected to it by means of electric conductors 11a.

Each signal transducer 13 is positioned inside the closed area 12 in a "blind" zone, in which the radio signals R do not propagate in a natural way because of the distance from the aperture 12a and/or because they are obstructed by the structure of the closed area 12, for example in the case of a motorway tunnel, by walls of rock and the concrete structure.

The function of the signal transducers 13 is to retransmit into the internal space of the closed area 12, in particular into the one or more blind zones, conducted signals Ru coinciding with the radio signals R, or with secondary radio signals R1 deriving from the processing of the radio signals R, or signals obtained by suitable processing, that allow the undisturbed propagation in the conductors of the internal electric network 11 of radio signals R or secondary radio signals R1. In particular, the signal transducers 13 are configured to receive the conducted signals Ru, possibly to process them, and to once again obtain the radio signals R or secondary radio signals R1 to be propagated inside the closed area 12.

The secondary signals R1 can be, for example, a part of the radio signals R emitted by the radio source S and present outside the closed area 12, or radio signals different from the radio signals R emitted by the radio source S, such as, for example, information signals such as alarm messages to signal situations of danger inside the closed area 12, or information messages of various types, even of a commercial nature.

In possible solutions, the signal transducers 13 can each have an antenna 13a for the propagation inside the closed area 12 of radio signals R, R1 carried as conducted signals Ru from the base station 16 by means of the conductors 11a of the internal electric network 11.

In some forms of embodiment, each signal transducer 13 can be integrated in a lighting device 15 of the closed area 12, or in other devices or electric appliances connected to the internal electric network 11.

Merely by way of example, if the apparatus 10 is used to receive FM radiophonic transmissions, for example in the home or inside a commercial structure, a signal transducer 13 can be directly integrated in a radio receiver.

The radio signals R, R1 transmitted by the signal transducers 13 of the apparatus 10 inside the closed area 12 can be captured and received by radio reception devices 19 present inside the closed area 12.

Fig. 1 shows an example solution in which the closed area 12 is a motorway tunnel and the radio reception devices 19 are antennas of apparatuses mounted on vehicles 20 in transit inside the tunnel.

In some forms of embodiment, the apparatus 10 can optionally comprise a signal repeater outside the structure 17 to repeat and propagate the radio signals R, R1 outside the closed area 12, where there is no cover of the radio signals R, R1.

With reference to fig. 1, the signal repeater outside the structure 17 can be positioned in correspondence to an aperture 12b located at one end of the closed area 12 opposite the aperture 12a in proximity to which the base station 16 is positioned.

In some forms of embodiment, the apparatus 10 can optionally comprise one or more internal signal repeaters 18 positioned inside the closed area 12 and configured to restore the conducted signals Ru that propagate through the electric conductors 11a.

In some forms of embodiment, the internal signal repeaters 18 can be integrated in the signal transducers 13.

Fig. 2 is used to describe forms of embodiment in which the base station 16 is provided with an interface device 31, also called "front-end", and with a programmable electronic unit 32, connected to each other.

The interface device 31, interposed between the electric power network 14 and the internal electric network 11, acts as an interface between the electric power network 14 and the radio source S at input, and the internal electric network 11 and the programmable electronic unit 32 at output, and is configured to allow both the passage of the voltage of the electric network from the electric power network 14 to the internal electric network 11, and also the passage of the radio signals R from the radio source S to the programmable electronic unit 32.

In some forms of embodiment, the interface device 31 of the base station 16 can include a device 38 for capturing and conditioning the radio signals R, provided at least with a capturing module, for example a reception antenna 38a located in radio visibility with respect to the radio source S and configured to capture the radio signals R transmitted by the latter.

The capturing and conditioning device 38 can also include a radio conditioning module 38b, connected to the reception antenna 38a and configured to receive the radio signals R from it and process them.

In possible implementations, it can be provided that this processing includes eliminating a background noise component, in order to increase the quality of the radio signals R.

Other implementations can provide that the radio conditioning module 38b performs a selection and amplification of a sub-band of channels of the radio signals R received, filtering the rest of the band spectrum to obtain at output secondary radio signals R1 that define a subset of the radio signals R.

Possible solutions can provide that the radio conditioning module 3 8b partly or completely obscures the radio signals R, to obtain, at output, secondary signals R1 that differ, partly or completely, from the radio signals R. This obscuring can be effected by introducing covering noise on all the band spectrum of the radio signals R or only on a part of it.

In other implementations, the radio conditioning module 38b can carry out a frequency conversion of the radio signals R, for example effecting a conversion from high frequencies toward lower frequencies *(downconversion),* to obtain conducted radio signals Ru transportable inside the closed area 12 by the electric conductors 11 a.

For example, it can be provided that the radio conditioning module 38b converts to low frequency, that is, below 100 MHz, the radio signal of mobile phone transmissions, normally comprised between 800 MHz and 1900 MHz.

In forms of embodiment described by way of example with reference to fig. 2, the programmable electronic unit 32 is connected to the radio conditioning module 38b of the interface device 31 and receives in input from it the radio signals R or the secondary radio signals R1.

In possible solutions, the programmable electronic unit 32 can be an electronic device with field programmable logic, known in the art as a "field programmable gate array" (FPGA), or a digital signal processor (DSP).

At input and output, the programmable electronic unit 32 can be connected respectively to the radio conditioning module 38b and to the internal electric network 11, and is configured to generate a conducted signal Ru and to inject the conducted signal Ru into the internal electric network 11.

The programmable electronic unit 32 can propagate toward the internal electric network 11, either completely or partly, the radio signals R, R1 coming from the radio conditioning module 38b, so that the conducted signal Ru introduced into the internal electric network 11 can coincide with the same radio signals R or secondary signals R1.

In some forms of embodiment, the conducted signal Ru can differ from the radio signals R or secondary signals R1.

In other forms of embodiment, the programmable electronic unit 32 can perform other processing of the radio signal R1 at input, to obtain secondary signals R1 to be injected into the internal electric network 11 as conducted signals Ru.

In particular, the programmable electronic unit 32 can perform the selection of the spectrum portions, that is, the radio signals R, to be propagated in the closed area 12 filtering the remaining spectral components.

In possible implementations, the programmable electronic unit 32 can be configured to generate a secondary signal R1 with pre-established frequencies, for example to allow the propagation in the closed area 12 only of a few FM commercial radio broadcasting stations and prevent the transmission of all the others.

In some forms of embodiment, combinable with all the forms of embodiment described here, the programmable electronic unit 32 can be used to obscure, partly or completely or even temporarily, the radio signals R and to generate secondary signals R1 independent of radio signals R to be propagated in the air inside the closed area 12.

For example, secondary signals R1 generated by the programmable electronic unit 32 can be information type signals, for example containing information concerning a danger or advertising information.

The secondary signal R1 of the information type can be broadcast on all the radio channels, or can be carried only on some bands, or radio channels, rather than the whole spectrum.

Therefore, the secondary signal R1 of the information type can be introduced into the internal electric network 11 in the form of conducted signal Ru. The secondary signal R1 can coincide with the conducted signal Ru or can differ because of further processing by the programmable electronic unit 32.

In some forms of embodiment, described by way of example with reference to fig. 3, the interface device 31 can include a capturing and conditioning device 35 connected at input directly to the electric power network 14 and at output to the programmable electronic unit 32.

The capturing and conditioning device 35 includes an extraction module 35a configured to extract the radio signals R directly from the electric power network 14, and a conditioning circuit 35b configured to transmit the radio signals R, or secondary radio signals R1 derived from their processing, to the programmable electronic unit 32.

This solution can be used in cases where the electric power network 14 receives the radio signals R from the radio source S and manages to conduct them with sufficient quality as far as the aperture 12a of the closed area 12, near which the base station 16 is positioned.

In possible implementations, it can be provided that the processing includes eliminating a background noise component, to increase the quality of the radio signals R.

In possible implementations the processing of the radio signals R made by the conditioning circuit 35a can include a pre-amplification of the radio signals R.

Possible solutions can provide that the conditioning circuit 35b partly or totally obscures the radio signals R, in order to obtain, at output, secondary signals R1 that differ, partly or completely, from the radio signals R. This obscuring can be carried out by introducing covering noises on the whole band spectrum of the radio signals R or on only a part of it.

According to possible variant forms of embodiment, after the extraction of the radio signals R from the electric power network 14, the conditioning circuit 35b can carry out their frequency conversion. For example, it can carry out a conversion from high frequencies to low frequencies (*downconversion*).

In other solutions, the conditioning circuit 35b can partly filter the radio signals R conducted by the electric power network 14, in order to obtain, at output, secondary signals R1 different from the radio signals R.

The programmable electronic unit 32 receives the signals coming from the conditioning circuit 35b as input, and generates a conducted signal Ru that is injected into the internal electric network 11.

The programmable electronic unit 32 can propagate, either completely or partly, the radio signals R, R1 coming from the conditioning circuit 35b, toward the internal electric network 11, so that the conducted signal Ru introduced into the internal electric network 11 can coincide with the radio signals R or the secondary signals R1.

In these forms of embodiment too, as in those described previously in which the radio conditioning module 38b is present instead of the conditioning circuit 35b, the programmable electronic unit 32 can select the spectrum portions, that is, of the radio signals R, to be propagated into the closed area 12, filtering the remaining spectral components, or it can obscure the radio signals R either completely or partly, for example by introducing noise.

Figs. 2 and 3 are used to describe by way of example forms of embodiment in which the programmable electronic unit 32 is provided with an entrance port 39 that allows to control and program the programmable electronic unit 32, for example setting the frequency bands and the radio channels of the secondary signal R1 to be selectively propagated in the closed area 12.

In some forms of embodiment, a signal generation device (not shown in the drawings) can be connected to the entrance port 39 so as to carry, through the entrance port 39 to the programmable electronic unit 32, the information signal that can define the secondary signal R1 transmitted in the closed area 12 in broadcast mode.

In some forms of embodiment, combinable with all the forms of embodiment described here, the interface device 31 can include an output conditioning module 37, connected at input to the programmable electronic unit 32 and at output to the internal electric network 11.

The output conditioning module 37 can be an electronic circuit configured to condition, that is, to process, the conducted signal Ru generated by the programmable electronic unit 32.

In some forms of embodiment, the output conditioning module 37 can perform a frequency conversion of the signal, for example, it can perform a conversion of the conducted signal Ru from high frequencies toward bands of lower frequencies.

In other forms of embodiment, the output conditioning module 37 can be configured to amplify the conducted signal Ru.

In other forms of embodiment, the output conditioning module 37 can be configured to obscure the conducted signal Ru, either totally or partly and on the basis of specific requests, situations, or needs, for example by introducing covering noise on the whole band spectrum of the conducted signal Ru or on only a part of it.

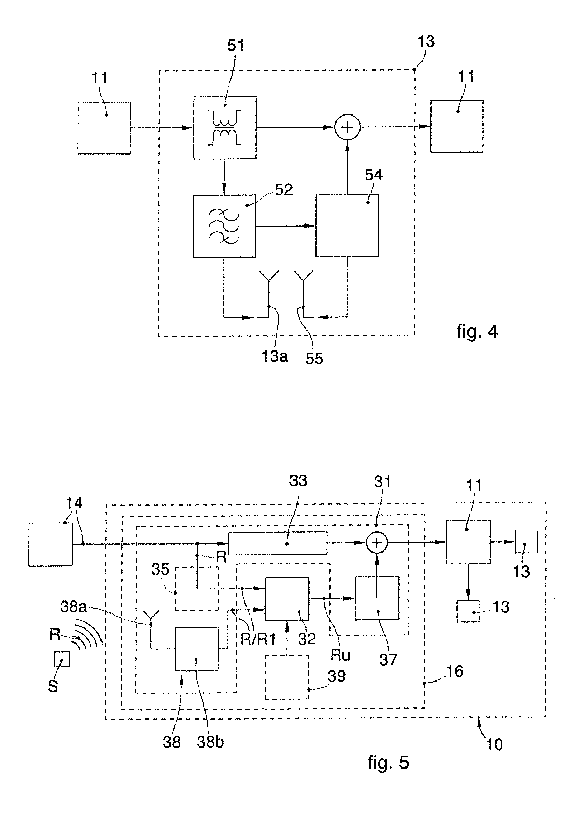

Fig. 4 is used to describe forms of embodiment in which each signal transducer 13 is provided with a coupling device 51 to the internal electric network 11.

In some forms of embodiment, the coupling device 51 can be a coupler of the capacitive type, the inductive type or a combination of the two types.

In possible implementations, the coupling device 51 can comprise capacitors, inductors, transformers or other active or passive electronic elements.

In some forms of embodiment, the coupling device 51 can interrupt the propagation of the conducted signal Ru along the internal electric network 11 downstream of the corresponding transducer 13.

The signal transducer 13 can also comprise a filtering member 52 that can have the function of limiting the band of the conducted signal Ru before being transmitted from the antenna 13a to a portion of the overall spectrum, and/or the function of achieving a frequency conversion of the conducted signal Ru injected by the programmable electronic unit 32 into the internal network 11. For example, the filtering member 52 can return a conducted radio signal Ru from low frequencies to spectrum portions at higher frequencies.

This operation can be performed, for example, in the case of propagation inside the closed area 12 of radio signals R typical of Wi-Fi data exchange protocols, which have typical frequencies of 2.4 GHz or 5 GHz, given the fact that the electric conductors 11 a offer better characteristics in terms of propagation at low frequencies, up to several hundred MHz.

In some forms of embodiment, the signal transducer 13 can include an amplification device 54 to increase and/or restore the quality of the conducted radio signal Ru that propagates along the internal electric network 11.

The amplification device 54 can be interposed between the filtering member 52 and the internal electric network 11 downstream of the coupling device 51.

In some forms of embodiment, a second antenna 55 can be connected to the amplification device 54 in order to capture the signal transmitted by the antenna 13a.

In possible implementations, the amplification device 54 and the second antenna 55 can be integrated in an internal signal repeater 18 and separate from the signal transducer 13.

Fig. 5 is used to describe forms of embodiment, combinable with all the forms of embodiment described here, in which the interface device 31 includes a filtering block 33 interposed between the electric power network 14 and the internal electric network 11 and through which the electric power network 14 and the internal electric network 11 are reciprocally connected.

In some forms of embodiment, the filtering block 33 can be made in several blocks, with intermediate input and output signals.

In some forms of embodiment, the filtering block 33 allows the passage of the network voltage, and filters, even only partly, the high frequency signals coming from the electric network 14 toward the internal electric network 11.

From the filtering block 33 it is possible to extract the high frequency signals conducted by the electric power network 14 and it is possible to inject new high frequency signals toward the internal electric network 11.

In some forms of embodiment, the filtering block 33 can be made with passive elements, such as resistors, capacitors, inductors and transformers.

In other forms of embodiment, the filtering block 33 can also comprise active electronic elements such as, for example, operational amplifiers.

According to possible solutions, if there is the filtering block 33, the output conditioning module 37 is interposed between the programmable electronic unit 32 and the exit of the filtering block 33.

Some forms of embodiment can provide the execution of various steps, passages and operations, as described above. The steps, passages and operations can be done at least partly with instructions performed by a machine which cause the execution of certain steps by a general-purpose or special-purpose processor. Alternatively, these steps, passages and operations can be performed by specific hardware components that contain hardware logic to perform the steps, or by any combination of components for programmed computers and personalized hardware components.

A program (or computer instructions) readable by a machine, or computer, can determine which tasks can be done in accordance with the method according to the present description. In some forms of embodiment, the program is a software readable by a machine or computer. The machine or computer includes a code to generate and memorize information and data introduced or generated during the course of the method according to the present description.

Forms of embodiment of the method in accordance with the present description can be included in a program for computers that can be memorized in a computer-readable mean that includes the instructions that, once performed by the apparatus 10 for the selective propagation of radio signals, determine the execution of the method discussed here.

In particular, elements according to the present invention can be given as machine-readable means to memorize the instructions which can be carried out by the machine. The machine-readable means can include, without being limited to, floppy disks, optical disks, CD-ROM, optical-magnetic disks, ROM, RAM, EPROM, EEPROM, optical or magnetic cards, propagation means or other types of machine-readable means suitable to memorize electronic information. For example, at least parts of the present invention can be downloaded as a computer program that can be transferred from a remote computer (a server for example) to a requesting computer (a client for example), by means of data signals achieved with carrier wave or other propagation means, via a communication connection (a modem for example or a network connection).

It is clear that modifications and/or additions of steps or parts may be made to the apparatus 10 and method for the selective propagation of radio signals as described heretofore, without departing from the field and scope of the present invention.

It is also clear that, although the present invention has been described with reference to some specific examples, a person of skill in the art shall certainly be able to achieve many other equivalent forms of apparatus and method for the selective propagation of radio signals, having the characteristics as set forth in the claims and hence all coming within the field of protection defined thereby.

Although the above refers to forms of embodiment of the invention, other forms of embodiment can be provided without departing from the main field of protection, which is defined by the following claims.

## Claims

1. Apparatus for the selective propagation in a closed area (12) of radio signals (R) transmitted by a radio source (S) outside said closed area (12), wherein said closed area (12) is provided with an internal electric network (11) that receives electric energy from an external electric power network (14), **characterized in that** it comprises a base station (16) provided with an interface device (31) and a programmable electronic unit (32), and one or more signal transducers (13) separate and remote from the base station (16) inside said closed area (12) and connected to said base station (16) by means of electric conductors (11a) of said internal electric network (11), said base station (16) being in a condition compatible with the capacity of said interface device (31) to capture said radio signals (R), said interface device (31) being configured to capture and condition said radio signals (R) and possibly to generate secondary radio signals (R1), and said programmable electronic unit (32) being connected to said interface device (31) and to said internal electric network (11) to receive said radio signals (R) and/or said secondary radio signals (R1) from said interface device (31), in order to generate a conducted radio signal (Ru) and to transmit said conducted radio signal (Ru) to said signal transducers (13) through said electric conductors (11a), said signal transducers (13) being configured to receive said conducted radio signals (Ru), possibly to process them, and to again obtain said radio signals (R) or said secondary radio signals (R1) to be propagated inside said closed area (12).

2. Apparatus as in claim 1, **characterized in that** said interface device (31) comprises a capturing and conditioning device (38) to capture and condition said radio signals (R) provided with a capturing module (38a) positioned in a condition of radio visibility with respect to said radio source (S) in order to capture said radio signals (R) directly from said radio source (S).

3. Apparatus as in claim 1, **characterized in that** said interface device (31) comprises a capturing and conditioning device (35) to capture and condition said radio signals (R) provided with an extraction module (35a) connected to said electric power network (14) in order to extract said radio signals (R) from said electric power network (14).

4. Apparatus as in claim 2 or 3, **characterized in that** said capturing and conditioning device (35, 38) comprises conditioning means (35b, 38b) connected to said programmable electronic unit (32) and configured to process said radio signals (R) and transmit to said programmable electronic unit (32) said radio signals (R) or secondary radio signals (R1) derived from the processing of said radio signals (R).

5. Apparatus as in any of the claims from 1 to 4, **characterized in that** it includes one or more internal signal repeaters (18) configured to restore the conducted radio signals (Ru) that are propagated through the electric conductors (11a).

6. Method for the selective propagation in a closed area (12) of radio signals (R) transmitted by a radio source (S) outside said closed area (12), wherein said closed area (12) is provided with an internal electric network (11) that receives electric energy from an external electric power network (14), **characterized in that** it comprises the following steps:
- positioning a base station (16) of an apparatus (10) for the selective propagation of said radio signals (R) in a condition compatible with the capacity of said base station (16) to capture said radio signals (R),
- capturing and conditioning said radio signals (R) and possibly generating secondary radio signals (R1) deriving from the conditioning of said radio signals (R),
- processing said radio signals (R) or said secondary radio signals (R1) in order to generate a conducted radio signal (Ru) to be transmitted through the internal electric network (11),
- injecting said conducted radio signal (Ru) into said internal electric network (11) to transfer, by means of electric conductors (11a) of said internal electric network (11), said conducted radio signal (Ru) and one or more signal transducers (13) inside said closed area (12),
- extracting said radio signal (R) or said secondary radio signal (R1) from the conducted radio signal (Ru) and propagating said radio signal (R) or said secondary radio signal (R1), by means of said one or more signal transducers (13), in at least the largest part of the internal space of said closed area (12).

7. Method as in claim 6, **characterized in that** capturing said radio signals (R) by said base station (16) comprises receiving said radio signals (R) directly from said radio source (S).

8. Method as in claim 6, **characterized in that** capturing said radio signals (R) by said base station (16) comprises extracting said radio signals (R) from said electric power network (14).

9. Method as in any claim from 6 to 8, **characterized in that** conditioning said radio signals (R) comprises one or more operations chosen from eliminating a background noise component, selecting a part of the band of said radio signals (R), filtering the rest of the band spectrum of said radio signals (R), partly or totally obscuring said radio signals (R) to obtain secondary radio signals (R1), as a subset of said radio signals (R).

10. Method as in any claim from 6 to 9, **characterized in that** the injection and the extraction of the conducted radio signal (Ru) in said internal electric network (11) does not provide procedures to instantiate the communication between the base station (16) and the signal transducers (13).

11. Method as in any claim from 6 to 10, **characterized in that** generating said secondary signal (R1) comprises filtering and/or completely obscuring said radio signals (R) and generating a radio signal of the information type distinct from said radio signals (R).

12. Method as in any claim from 6 to 11, **characterized in that** injecting and extracting said radio signals (R) or said secondary radio signals (R1) from said internal electric network (11) comprises one or more operations chosen from amplifying or effecting one or more frequency conversions of said radio signals (R) or said secondary radio signals (R1).
